# EUROPEAN PATENT SPECIFICATION

(11) **EP 3 517 372 B1**
(45) Date of publication and mention of the grant of the patent: **16.09.2020**
(21) Application number: 19153400.7
(22) Date of filing: 23.01.2019
(51) Int. Cl.: B60R 21/2165, B60R 13/02

(54) **VEHICLE TRIM PANEL WITH TEAR-OPEN AIRBAG DEPLOYMENT REGION**
FAHRZEUGVERKLEIDUNGSELEMENT MIT EINEM AUFREISSBEREICH FÜR EINEN AIRBAG
PANNEAU DE GARNITURE DE VÉHICULE AVEC ZONE DE RUPTURE POUR UN COUSSIN GONFLABLE

(30) Priority: 24.01.2018 GB 201801155
(43) Date of publication of application: 31.07.2019
(73) Proprietor: Ford Global Technologies, LLC, Dearborn, MI 48126 (US)
(72) Inventor: SWINIARKSI, Michal Jan, Brentwood, Essex CM14 4YN (GB); SCOTT, Tim, Benfleet, Essex SS7 5TA (GB)
(74) Representative: Haseltine Lake Kempner LLP

(56) References cited:
- DE-A1-102005 017 124
- JP-A- 2014 234 132
- US-A- 5 174 602
- US-A1- 2002 079 678

## Description

This disclosure relates to a vehicle interior trim panel, and in particular, but not exclusively, relates to a piece of airbag trim that is configured to resist deflection from within the passenger compartment of the vehicle.

### Introduction

A modern vehicle, such as a car or a truck, is typically fitted with one or more airbags in order for the vehicle to comply with safe design standards in crashworthiness and crash compatibility. For example, a vehicle may be fitted with a first airbag that deploys from a steering wheel of the vehicle and a second airbag that deploys from a trim panel of the vehicle, such as a dashboard trim panel.

US2002079678 discloses an air bag device having a switch adapted to be operated when a breakable cover member covering an air bag module mounted in the steering wheel is pushed.

In many cases, a trim panel is used to conceal the airbag behind the trim panel, e.g. within a body portion of the vehicle. In order for the airbag to deploy from behind the trim panel, the trim panel may be provided with a frangible portion that is configured to break or tear open upon the application of a force provided by the airbag as it rapidly inflates and expands from its position behind the trim.

With the introduction of ever stricter safe design standards, there is the need to reduce the time in which an airbag can deploy from a trim panel. Such requirements may be met by reducing the strength of the frangible portion of the trim panel, so that the airbag can deploy more quickly from its position behind the trim.

However, in making the trim panel less strong, the trim panel may no longer meet other requirements, for example the trim panel may be too flimsy and no longer suitable for everyday use within a passenger vehicle. Such an issue may be of particular concern in a commercial vehicle, in which trim panels should be extremely durable in order to cope with the tough working requirements of the commercial vehicle.

### Statements of Invention

The aforementioned objectives are attained by means of an interior trim panel according to claim 1, and by means of a method of forming an interior trim panel according to claim 14.

According to an aspect of the present disclosure there is provided a vehicle interior trim panel, e.g. an airbag trim panel. The panel comprises a tear-open airbag deployment region formed from a plurality of sections, e.g. doors, that cooperate to cover the airbag in an installed configuration, the sections being joined by a tear seam, the panel further comprising at least one support feature that extends at least partially across the tear seam. The support feature may comprise a thinned portion at, or near to, a centre line of the tear seam.

The panel may be formed such that the sections, tear seam and support feature are unitary in structure, i.e. formed from a single piece of material.

The panel may have a passenger-facing side of the panel and an airbag-facing side of the panel, when the panel is in an installed configuration. The support feature may project from the passenger-facing side of the panel in an installed configuration. The support feature may project from the airbag-facing side of the panel in an installed configuration.

The support feature may be provided at least partially within the tear seam. The distance by which the support feature projects from the panel, e.g. the height of the support feature, may increase at, or near to, the centre line of the tear seam. The maximum height of the support feature may be greater than the thickness of the panel, e.g. the thickness of the panel at the tear seam. For example, the thickness of the panel may be approximately 1 mm in the region of the tear seam, and the maximum height of the support feature may be greater than the thickness of the panel.

The support feature may be formed integral to the panel. For example, the panel may be fabricated from a polymeric material, such that the panel may be formed by virtue of an injection moulding process.

The support feature may be thinned in a direction substantially parallel to the direction in which the tear seam extends. For example, where the tear seam extends in a first direction across the panel, the support feature may extend in a second direction substantially perpendicular to the first direction and may be thinned in a direction substantially parallel to the first direction.

The support feature may be configured to increase the stiffness of the panel in the region of the tear seam, for example to reduce the deflection of the panel upon application of a force from the passenger-facing side of the panel, when the panel is installed to a vehicle. The thinned portion of the support feature may be configured to break upon application of a force applied from the airbag-facing side of the panel, when the panel is installed to a vehicle. The thinned portion of the support feature may be configured to break upon the expansion of an airbag in an installed configuration. The resistance to the panel deflecting and/or breaking, may be defined by the ultimate tensile strength of the tear seam in combination with the ultimate tensile strength of the support feature.

The tear seam may comprise at least one elongate channel formed in an airbag-facing side of the panel. The support feature may project from a base of the at least one channel. The support feature may be connected to a side wall of the channel.

According to the invention the panel comprises a plurality of support features which are J Z more closely spaced towards the middle of the tear seam.

The tear-open airbag deployment region may be formed from two sections. Each of the section may cover approximately half of the tear-open airbag deployment region.

A vehicle may be provided comprising one or more of the above mentioned panels. According to another aspect of the present disclosure there is provided a method of forming a vehicle interior trim panel, the panel comprising a tear-open airbag deployment region formed from a plurality of sections that cooperate to cover the airbag in an installed configuration, the sections being joined by at least one tear seam, the panel further comprising at least one support feature that extends across the tear seam, the method comprising: forming a support feature at, or near to, a centre line of the tear seam. The method may comprise forming a thinned portion of the support feature at, or near to, a centre line of the tear seam.

To avoid unnecessary duplication of effort and repetition of text in the specification, certain features are described in relation to only one or several aspects or arrangements of the disclosure. However, it is to be understood that, where it is technically possible, features described in relation to any aspect or arrangement of the disclosure may also be used with any other aspect or arrangement of the disclosure.

### Brief Description of the Drawings

For a better understanding of the present disclosure, and to show more clearly how it may be carried into effect, reference will now be made, by way of example, to the accompanying drawings, in which:
Figure 1 shows a dashboard of a vehicle;
Figures 2a and 2b shows an interior trim panel of a vehicle; and
Figure 3 shows a detailed view of the interior trim panel of figures 2a and 2b.

### Detailed Description

The present disclosure provides a trim panel for a vehicle, such a car, a van, a truck, a motorcycle, a marine vessel or an aircraft. In particular, the trim panel may be an interior trim panel configured to conceal an airbag within a portion of the vehicle, such as within a dashboard of the vehicle.

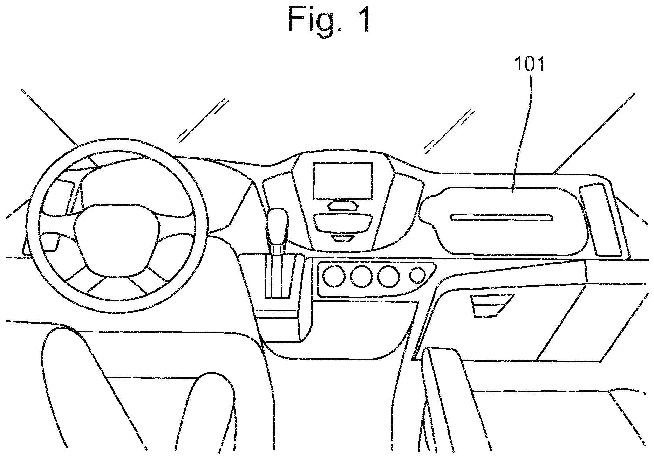

Figure 1 shows a dashboard of a vehicle, the dashboard having a trim panel 101 configured to cover a front passenger-side airbag. However, the trim panel 101 may be any appropriate type of trim panel. For example, the trim panel 101 may be configured to cover, e.g. conceal, any type of airbag of the vehicle, such as a side curtain airbag, a side door airbag, a knee airbag, or a front driver-side airbag.

In order to allow the airbag to deploy from behind the trim panel 101, the trim panel 101 comprises a tear-open airbag deployment region 103 that is configured to break and open in an outward manner, i.e. into the passenger compartment of the vehicle, as a result of the rapid inflation and expansion of the airbag. Conventionally, the tear-open airbag deployment region 103 (referred to simply as the region 103 in the following description) comprises a single section, e.g. a door, configured to cover the airbag in an installed configuration. In a first operative state, e.g. where the airbag has not been deployed, the door is connected to the trim panel 101 along one edge of the door by virtue of a hinge, and is connected to the trim panel 101 on the remainder of its edges by a tear seam, which is usually provided on the airbag-facing side of the trim panel 101. When the trim panel 101 is in the first operative state, the door of the trim panel 101 may be supported along the tear seam from the airbag-facing side of the trim panel 101 by one or more other components, such as another portion of the dashboard, e.g. an instrument panel. In this manner, the region 103 is prevented from breaking open in an inward manner, since whichever component is positioned behind the tear seam supports the tear seam to prevent it from becoming broken upon the application of force to the trim panel 101 from the passenger-facing side of the trim panel 101.

In a second operative state, where the airbag has been deployed, the door remains connected to the trim panel 101 by virtue of the hinge, but becomes broken away from the remainder of the trim panel 101 at the weakened region provided by the tear seam, as a result of the force applied to the airbag-facing side of the trim panel 101 upon the rapid inflation and expansion of the airbag. In many instances the hinge is formed integral to the trim panel 101, e.g. by providing a line of weakness in the trim panel 101 about which the door can pivot, but not break away from under the force of the expanding airbag.

With the introduction of ever stricter safe design standards, it is desirable to reduce the deployment time of an airbag. In particular, it is desirable to reduce the deployment time of larger airbags, such as a front passenger-side airbag of a commercial vehicle.

One way in which the deployment time of an airbag can be reduced, is to provide a plurality of smaller sections, e.g. smaller doors, that cooperate to cover the airbag in an installed configuration. For example, the region 103 may comprises a plurality of sections joined by a tear seam. However, in contrast to a trim panel that has a single tear-open section, the tear seam of a trim panel having multiple tear-open sections is located away from the periphery of the region 103. As a result of the position of the tear seam, it is unable to be supported by another component, such as the instrument panel. As such, the tear seam is at risk of being broken as a result of the application of force to the trim panel 101 from the passenger-facing side of the trim panel 101. Such a problem may be of particular concern for larger trim panels, e.g. a trim panel for a dashboard of a commercial vehicle, since such trim panels may be regularly exposed to loading, e.g. as a result of an occupant of the vehicle leaning on the dashboard.

It can be seen, therefore, that there are conflicting requirements for the rigidity and the strength of an airbag trim panel. On one hand, the trim panel must be weak enough to break open to effect the deployment of an airbag, and on the other hand, the trim panel must be sturdy enough to not break as a result of routine use, such as an occupant pressing against the tear-open airbag deployment region 103 of the panel 101. The present invention is advantageous as it address such an issue.

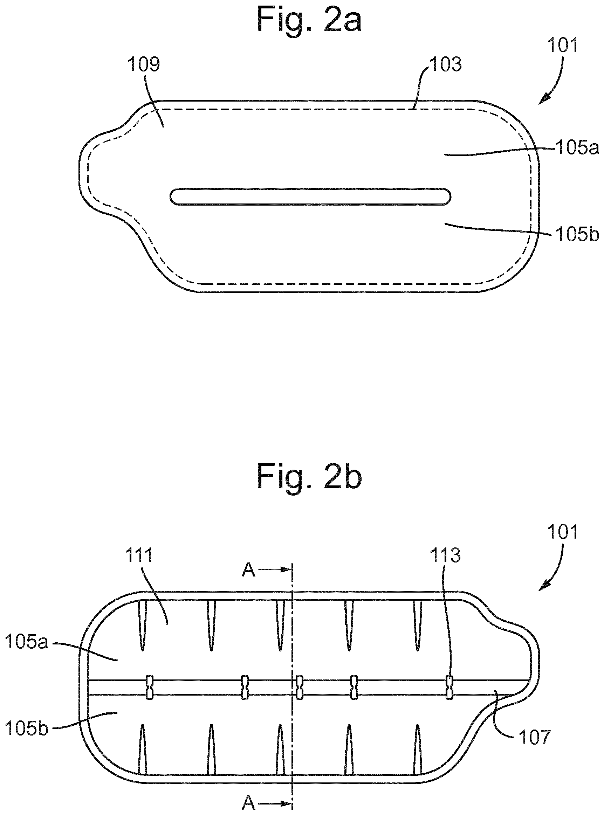

Figures 2a and 2b show a passenger-facing side 109 of the panel 101 and an airbag-facing side 111 of the panel 101 respectively, when the panel 101 is installed to a vehicle. The panel 101 comprises a region 103 having two sections 105a, 105b that are joined towards the middle of the panel 101 by a tear seam 107. In the arrangement shown in figures 2a and 2b, each of the sections 105a, 105b are approximately equal in size, such that each section 105a, 105b covers approximately half of the region 103. However, in one or more other arrangements, the sections 105a, 105b may be of any appropriate size and shape. Indeed, the panel 101 may comprise any appropriate number of sections that cooperate to cover the airbag when the panel 101 is installed to a vehicle.

In the arrangement shown in figures 2a and 2b, the panel 101 is formed from a single piece of material. For example, the panel 101 may be formed from a single piece of polymeric material, e.g. by virtue of an injection moulding process. As such, when viewed from the passenger-facing side 109, the region 103 comprises a single unbroken surface that extends across the sections 105a, 105b and the tear seam 107. In this manner, a passenger of the vehicle may be unaware that the panel 101 is formed from a plurality of sections105a, 105b, and/or that the panel 101 comprises a weakened region around the tear seam.

Figure 2b shows the airbag-facing side 111 of the panel 101, e.g. the underside/rear side of the panel 101. When viewed from the airbag-facing side 111, one of the sections 105a extends from a top peripheral edge of the panel 101 towards the middle of the panel 101, and the other of the sections 105b extends from a bottom peripheral edge of the panel 101 towards the middle of the panel 101. However, the sections 105a, 105b, and/or any other additional sections, may extend in any appropriate direction to cover the airbag.

The tear seam 107 joins the two sections 105a, 105b towards the middle of the panel 101. In the arrangement shown in figure 2b, the tear seam 107 comprises a channel that extends between the side peripheral edges of the panel 101. The tear seam 107 is configured to reduce locally the thickness of the panel 101 to provide a line of weakness in the panel 101, such that the tear-open airbag deployment region 103 bursts open upon the activation of an airbag provided behind the panel 101. As mentioned above, where an airbag panel 101 has a tear seam 107 provided across the middle of the airbag deployment region 103, it is difficult to support the sections 105a, 105b of the panel 101 to resist the application of force from the passenger-facing side of the panel 101. As such, an airbag panel having a plurality of sections, or doors, may be prone to inadvertent damage during everyday use of the vehicle to which the panel is installed.

In order to help prevent the panel 101 from being damaged, the panel 101 comprises at least one support feature 113 that extends across the tear seam 107, e.g. to bridge the sections 105a, 105b. The support feature 113 is configured to increase the stiffness/strength of the panel 101 in the region surrounding the support feature 113. Thus, by providing the support feature 113 across the tear seam 107, the team seam 107 may be less prone to breaking under loading from the passenger-facing side 109 of the panel. In the arrangement shown in the figures, the support feature 113 is unitary with the remainder of the panel 101. For example, the support feature may be formed during the manufacture of the panel 101, e.g. during the injection moulding of the panel 101. However, in another arrangement, the support feature 113 may be manufactured separately, and assembled to the panel 101.

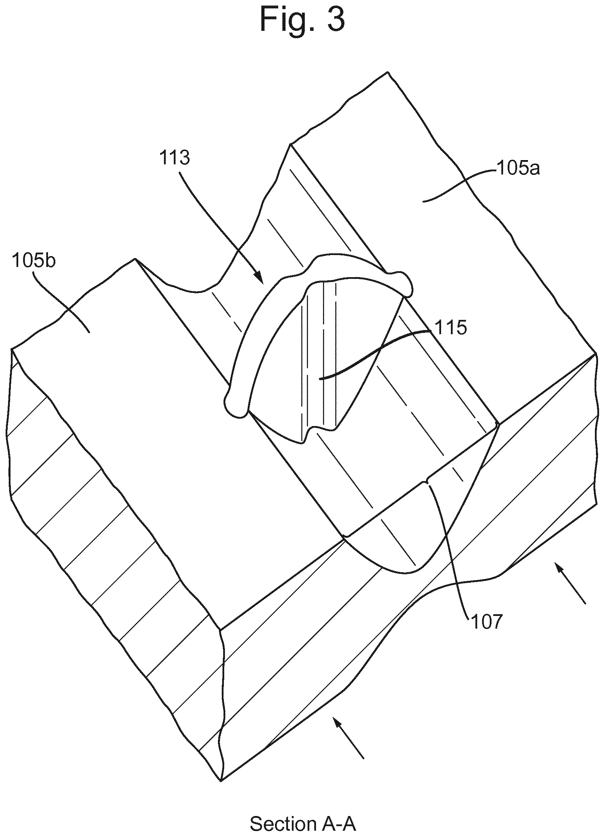

Figure 3 shows a detailed view of a portion of the tear seam 107 and one of the support features 113. The support feature 113 is provided on the panel 101 such that it extends across the tear seam 107 in a direction perpendicular to the direction in which the tear seam 107 extends across the panel 101. For example, where the tear seam 107 extends between side peripheral edges of the panel 101, e.g. in a horizontal direction, the support feature 113 may extend between top and bottom peripheral edges of the panel 101, e.g. in a vertical direction. Such an arrangement may be advantageous as it provides resistance to the tear seam 107 breaking and the sections 105a, 105b opening in an inward manner as a result of the application of force to the passenger-facing side 109 of the panel 101.

However, in order to ensure that the support feature 113 does not unduly increase the resistance to the tear seam 107 breaking and the sections 105a, 105b opening in an outward manner as a result of the application of force to the airbag-facing side 111 of the panel 101, the support feature 113 comprises a thinned portion 115, for example at, or near to, the position where the support feature 113 extends across a longitudinal axis of the tear seam. In the arrangement shown in the figures, the longitudinal axis is understood to be the centre line of the tear seam along the length of the tear seam.

In the arrangement shown in figure 3, the thinned portion of the support feature 113 is orientated to reduce the thickness of the support feature 113 in a direction substantially parallel to the direction in which the tear seam 107 extends. For example, where the support feature 113 has a length in a direction that extends between the top and bottom peripheral edges of the panel 101, and the tear seam 107 extends between the lateral edges of the panel 101, the support feature 113 may be thinned across its width. In particular, where the support feature 113 is elongate, the thinned portion of the support feature 113 may be provided towards a longitudinal mid-point of the support feature 113. However, the support feature 113 may be of any appropriate form comprising a thinned portion configured to reduce locally the thickness of the support feature, and thus the capacity of the support feature 113 to withstand loads tending to elongate the support feature 113, i.e. the ultimate tensile strength of the support feature 113.

In the arrangement shown in figure 3, the support feature 113 is connected to the walls of the channel that forms the tear seam 107. Specifically, the support feature 113 projects from the base of the channel towards the airbag-facing side 111 of the panel 101. However, in one or more other arrangements, the support feature 113 may be connected to the sections 105a, 105b such that the support feature 113 spans the tear seam 107 without touching one or more walls of the channel that forms the tear seam 107. Additionally or alternatively, the support feature 113 may be connected to the walls of the channel that form the tear seam 107, without touching the base of the channel. Thus, it can be seen that the amount by which the support feature 113 increases the stiffness of the tear seam 107 may be dependent upon the size and/or shape of the support feature 113, and/or the position at which the support feature 113 is connected to the tear seam 107 and/or the sections 105a, 105b.

In the arrangement shown in figure 2b, the panel 101 comprises a plurality of support features 113 distributed along the length of the tear seam 107. The distribution, e.g. the spacing, of the support features 113 is such that the support features 113 are more closely spaced towards the middle of the tear seam 107. In this manner, the support features 113 provide a greater amount of support at the point at which the tear seam 107 is most likely to break, e.g. as a result of the application of force from the passenger-facing side 109 of the panel 111.

As can be seen from Figures 2a, 2b, and 3, the tear seam is a portion of minimum (non-zero) dimension of the panel 101, or a reduced (non-zero) dimension of the panel 101. For example, the two sections 105a, 105b of the panel 101 may have a depth and the tear seam may be part of the panel 101 having a minimum depth (as is shown in Figure 3). When the tear seam 107 is a channel, the channel may be the portion of the panel 101 with minimum depth. The channel may comprise two side walls and a base. As shown in Figure 3 the two side walls may taper to the base. The channel (or the base thereof) may define a channel axis (or tear seam axis) and the support feature 113 may be perpendicular (e.g. a longitudinal axis thereof may be perpendicular) to the channel axis. The tear seam may be a continuation of the two parts 105a, 105b. Accordingly, the two parts 105a, 105b, and the tear seam 107 may be integrally formed as part of the side panel 101. The tear seam 107 may therefore be a portion of the panel 101 that has a minimum cross-sectional area, for example a minimum depth along a width of the side panel 101. The channel may be symmetrical. The tear seam 107 may comprise two channels, each channel facing (e.g. tapering outward into) a respective side of the side panel (e.g. the passenger-facing side and the airbag-facing side). The two channels in this example may be joined by a section of the side panel with minimum dimension (e.g. depth).

It will be appreciated by those skilled in the art that although the disclosure has been described by way of example with reference to one or more arrangements, it is not limited to the disclosed arrangements and that alternative arrangements could be constructed without departing from the scope of the invention as defined by the appended claims.

## Claims

1. A vehicle interior trim panel (101), the panel (101) comprising a tear-open airbag deployment region (103) formed from a plurality of sections (105a, 105b) that cooperate to cover an airbag in an installed configuration, the sections (105a, 105b) being joined by a tear seam (107), the panel (101) further comprising a plurality of support features (113) distributed along the length of the tear seam (107), each support feature (113) extending at least partially across the tear seam (107), wherein each support feature (113) comprises a thinned portion (115) at, or near to, a centre line of the tear seam (107) **characterised in that** the distribution of the support features (113) is such that the support features (113) are more closely spaced towards the middle of the tear seam (107).

2. A panel (101) according to claim 1, wherein at least one of the support features projects from an airbag-facing side (111) of the panel (101) in an installed configuration.

3. A panel (101) according to any of the preceding claims, wherein at least one of the support features (113) increases in height at, or near to, the centre line of the tear seam (107).

4. A panel (101) according to any of the preceding claims, wherein the maximum height of at least one of the support features (113) is greater than the thickness of the tear seam (107) at the centre line of the tear seam (107).

5. A panel (101) according to any of the preceding claims, wherein at least one of the support features (113) is formed integral to the panel (101).

6. A panel (101) according to any of the preceding claims, wherein at least one of the support features (113) is thinned in a direction substantially parallel to the direction in which the tear seam (107) extends.

7. A panel (101) according to any of the preceding claims, wherein at least one of the support features (113) is configured to increase the stiffness of the panel (101) in the region of the tear seam (107).

8. A panel (101) according to any of the preceding claims, wherein the tear seam (107) comprises an elongate channel formed in an airbag-facing side of the panel (101).

9. A panel (101) according to claim 8, wherein at least one of the support features (113) projects from a base of the channel.

10. A panel (101) according to claim 8 or 9, wherein at least one of the support features (113) is connected to a side wall of the channel.

11. A panel (101) according to any of the preceding claims, wherein the tear-open airbag deployment region (103) is formed from two sections (105a, 105b), each section (105a, 105b) covering approximately half of the tear-open airbag deployment region (103).

12. A panel (101) according to any of the preceding claims, wherein the tear seam (107)and the thinned portion (115) of the support feature (113) is configured to break upon the expansion of an airbag in an installed configuration.

13. A vehicle comprising the panel (101) of any of claims 1 to 12.

14. A method of forming a vehicle interior trim panel (101), the panel (101) comprising a tear-open airbag deployment region (103) formed from a plurality of sections (105a, 105b) that cooperate to cover an airbag in an installed configuration, the sections (105a, 105b) being joined by at least one tear seam (107), the panel (101) further comprising a plurality of support features (113) distributed along the length of the tear seam (107), each support feature (113) extending across the tear seam (107), each support feature (113) comprising a thinned portion (115) at, or near to, a centre line of the tear seam (107), the method **characterised by**
distributing the plurality of support features (113) along the length of the tear seam (107) such that the support features (113) are more closely spaced towards the middle of the tear seam (107).

## Patentansprüche

1. Fahrzeuginnenraum-Verkleidungsplatte (101), die Platte (101) umfassend einen Aufreiß-Airbagentfaltungsbereich (103), der aus einer Vielzahl von Abschnitten (105a, 105b) gebildet ist, die zusammenwirken, um einen Airbag in einer installierten Konfiguration abzudecken, wobei die Abschnitte (105a, 105b) durch eine Reißnaht (107) verbunden sind, wobei die Platte (101) ferner eine Vielzahl von Stützeinrichtungen (113) umfasst, die entlang der Länge der Reißnaht (107) verteilt sind, wobei sich jede Stützeinrichtung (113) zumindest teilweise über die Reißnaht (107) erstreckt, wobei jede Stützeinrichtung (113) einen verdünnten Abschnitt (115) an oder nahe einer Mittellinie der Reißnaht (107) umfasst, **dadurch gekennzeichnet, dass** die Verteilung der Stützeinrichtungen (113) derart ist, dass die Stützeinrichtungen (113) zu der Mitte der Reißnaht (107) hin enger beabstandet sind.

2. Platte (101) gemäß Anspruch 1, wobei mindestens eine der Stützeinrichtungen von einer Airbag-zugewandten Seite (111) der Platte (101) in einer installierten Konfiguration hervorsteht.

3. Platte (101) gemäß einem der vorherigen Ansprüche, wobei die Höhe mindestens einer der Stützeinrichtungen (113) an oder nahe der Mittellinie der Reißnaht (107) zunimmt.

4. Platte (101) gemäß einem der vorherigen Ansprüche, wobei die maximale Höhe mindestens einer der Stützeinrichtungen (113) größer ist als die Stärke der Reißnaht (107) an der Mittellinie der Reißnaht (107).

5. Platte (101) gemäß einem der vorherigen Ansprüche, wobei mindestens eine der Stützeinrichtungen (113) integral mit der Platte (101) gebildet ist.

6. Platte (101) gemäß einem der vorherigen Ansprüche, wobei mindestens eine der Stützeinrichtungen (113) in einer Richtung im Wesentlichen parallel zu der Richtung, in der sich die Reißnaht (107) erstreckt, verdünnt ist.

7. Platte (101) gemäß einem der vorherigen Ansprüche, wobei mindestens eine der Stützeinrichtungen (113) konfiguriert ist, um die Steifigkeit der Platte (101) in dem Bereich der Reißnaht (107) zu steigern.

8. Platte (101) gemäß einem der vorherigen Ansprüche, wobei die Reißnaht (107) einen länglichen Kanal umfasst, der in einer dem Airbag-zugewandten Seite der Platte (101) gebildet ist.

9. Platte (101) gemäß Anspruch 8, wobei mindestens eine der Stützeinrichtungen (113) von einer Basis des Kanals hervorsteht.

10. Platte (101) gemäß Anspruch 8 oder 9, wobei mindestens eine der Stützeinrichtungen (113) mit einer Seitenwand des Kanals verbunden ist.

11. Platte (101) gemäß einem der vorherigen Ansprüche, wobei der Aufreiß-Airbagentfaltungsbereich (103) aus zwei Abschnitten (105a, 105b) gebildet ist, wobei jeder Abschnitt (105a, 105b) ungefähr eine Hälfte des Aufreiß-Airbagentfaltungsbereichs (103) abdeckt.

12. Platte (101) gemäß einem der vorherigen Ansprüche, wobei die Reißnaht (107) und der verdünnte Abschnitt (115) der Stützeinrichtung (113) konfiguriert sind, um bei der Ausdehnung eines Airbags in einer eingebauten Konfiguration zu brechen.

13. Fahrzeug, umfassend die Platte (101) gemäß einem der Ansprüche 1 bis 12.

14. Verfahren zum Bilden einer Fahrzeuginnenraum-Verkleidungsplatte (101), die Platte (101) umfassend einen Aufreiß-Airbagentfaltungsbereich (103), der aus einer Vielzahl von Abschnitten (105a, 105b) gebildet ist, die zusammenwirken, um einen Airbag in einer installierten Konfiguration abzudecken, wobei die Abschnitte (105a, 105b) durch mindestens eine Reißnaht (107) verbunden sind, jede die Platte (101) ferner umfassend eine Vielzahl von Stützeinrichtungen (113), die entlang der Länge der Reißnaht (107) verteilt sind, wobei sich jede Stützeinrichtung (113) über die Reißnaht (107) erstreckt, jede Stützeinrichtung (113) umfassend einen verdünnten Abschnitt (115) an oder nahe einer Mittellinie der Reißnaht (107), wobei das Verfahren **gekennzeichnet ist durch** Verteilen der Vielzahl von Stützeinrichtungen (113) entlang der Länge der Reißnaht (107), sodass die Stützeinrichtungen (113) zu der Mitte der Reißnaht (107) hin enger beabstandet sind.

## Revendications

1. Un panneau de garniture intérieure de véhicule (101), le panneau (101) comprenant une région de déploiement de coussin gonflable à ouverture par déchirement (103) formée à partir d'une pluralité de sections (105a, 105b) qui coopèrent pour couvrir un coussin gonflable dans une configuration installée, les sections (105a, 105b) étant reliées par une couture de déchirement (107), le panneau (101) comprenant en outre une pluralité de caractéristiques de support (113) réparties sur la longueur de la couture de déchirement (107), chaque caractéristique de support (113) s'étendant au moins partiellement en travers de la couture de déchirement (107), dans lequel chaque caractéristique de support (113) comprend une partie amincie (115) au niveau ou à proximité d'une ligne centrale de la couture de déchirement (107), **caractérisé en ce que** la répartition des caractéristiques de support (113) est telle que les caractéristiques de support (113) sont plus étroitement espacées vers le milieu de la couture de déchirement (107).

2. Un panneau (101) selon la revendication 1, dans lequel au moins une des caractéristiques de support fait saillie à partir d'un côté (111) du panneau (101) faisant face à un coussin gonflable dans une configuration installée.

3. Un panneau (101) selon l'une quelconque des revendications précédentes, dans lequel au moins une des caractéristiques de support (113) augmente en hauteur au niveau ou à proximité de la ligne centrale de la couture de déchirement (107).

4. Un panneau (101) selon l'une quelconque des revendications précédentes, dans lequel la hauteur maximale d'au moins une des caractéristiques de support (113) est supérieure à l'épaisseur de la couture de déchirement (107) au niveau de la ligne centrale de la couture de déchirement (107).

5. Un panneau (101) selon l'une quelconque des revendications précédentes, dans lequel au moins une des caractéristiques de support (113) est formée d'un seul tenant avec le panneau (101).

6. Un panneau (101) selon l'une quelconque des revendications précédentes, dans lequel au moins une des caractéristiques de support (113) est amincie dans une direction sensiblement parallèle à la direction dans laquelle s'étend la couture de déchirement (107).

7. Un panneau (101) selon l'une quelconque des revendications précédentes, dans lequel au moins une des caractéristiques de support (113) est configurée pour augmenter la rigidité du panneau (101) dans la région de la couture de déchirement (107).

8. Un panneau (101) selon l'une quelconque des revendications précédentes, dans lequel la couture de déchirement (107) comprend une rainure allongée formée dans un côté du panneau (101) faisant face à un coussin gonflable.

9. Un panneau (101) selon la revendication 8, dans lequel au moins une des caractéristiques de support (113) fait saillie à partir d'une base de la rainure.

10. Un panneau (101) selon la revendication 8 ou 9, dans lequel au moins une des caractéristiques de support (113) est reliée à une paroi latérale de la rainure.

11. Un panneau (101) selon l'une quelconque des revendications précédentes, dans lequel la région de déploiement de coussin gonflable à ouverture par déchirement (103) est formée à partir de deux sections (105a, 105b), chaque section (105a, 105b) couvrant approximativement la moitié de la région de déploiement de coussin gonflable à ouverture par déchirement (103).

12. Un panneau (101) selon l'une quelconque des revendications précédentes, dans lequel la couture de déchirement (107) et la partie amincie (115) de la caractéristique de support (113) est configurée pour se rompre lors de l'expansion d'un coussin gonflable dans une configuration installée.

13. Un véhicule comprenant le panneau (101) selon l'une quelconque des revendications 1 à 12.

14. Un procédé de formation d'un panneau de garniture intérieure de véhicule (101), le panneau (101) comprenant une région de déploiement de coussin gonflable à ouverture par déchirement (103) formée à partir d'une pluralité de sections (105a, 105b) qui coopèrent pour couvrir un coussin gonflable dans une configuration installée, les sections (105a, 105b) étant reliées par au moins une couture de déchirement (107), le panneau (101) comprenant en outre une pluralité de caractéristiques de support (113) réparties sur la longueur de la couture de déchirement (107), chaque caractéristique de support (113) s'étendant en travers de la couture de déchirement (107), chaque caractéristique de support (113) comprenant une partie amincie (115) au niveau ou à proximité d'une ligne centrale de la couture de déchirement (107), le procédé **caractérisé par**
la répartition de la pluralité de caractéristiques de support (113) sur la longueur de la couture de déchirement (107) de telle sorte que les caractéristiques de support (113) sont plus étroitement espacées vers le milieu de la couture de déchirement (107).
